**Europäisches Patentamt**

**European Patent Office**

**Office européen des brevets**

(19)

(11) Veröffentlichungsnummer : **0 420 105 B1**

(12) # EUROPÄISCHE PATENTSCHRIFT

(45) Veröffentlichungstag der Patentschrift :
**24.11.93 Patentblatt 93/47**

(51) Int. Cl.$^5$ : **G01L 9/00,** G01L 9/12,
G01L 13/06

(21) Anmeldenummer : **90118312.9**

(22) Anmeldetag : **24.09.90**

(54) **Differenzdruckmessgerät mit Selbstüberwachung.**

(30) Priorität : **28.09.89 DE 3932443**

(43) Veröffentlichungstag der Anmeldung :
**03.04.91 Patentblatt 91/14**

(45) Bekanntmachung des Hinweises auf die
Patenterteilung :
**24.11.93 Patentblatt 93/47**

(84) Benannte Vertragsstaaten :
**CH DE FR GB IT LI**

(56) Entgegenhaltungen :
**DE-A- 3 321 580**
**DE-A- 3 340 834**
**DE-A- 3 414 896**
**DE-C- 3 504 329**

(73) Patentinhaber : **Endress u. Hauser GmbH u.
Co.
Hauptstrasse 1
D-79689 Maulburg (DE)**

(72) Erfinder : **Gerst, Peter
Albert-Braun-Strasse 11a
W-7500 Karlsruhe (DE)**
Erfinder : **Springhart, Wulf
Oberböllen 7
W-7869 Böllen (DE)**

(74) Vertreter : **Leiser, Gottfried, Dipl.-Ing. et al
Prinz & Partner, Manzingerweg 7
D-81241 München (DE)**

EP 0 420 105 B1

Jouve, 18, rue Saint-Denis, 75001 PARIS

**Beschreibung**

Die Erfindung betrifft ein Differenzdruckmeßgerät mit einem flüssigkeitsgefüllten Einkammer-Differenzdrucksensor, der zwei Meßkondensatoren enthält, deren Kapazitäten sich mit einem zu erfasssenden Differenzdruck gegensinnig und mit der Temperatur gleichsinnig ändern und von zugeordneten Kapazitätsmeßschaltungen zu Meßsignalen umgeformt werden, die einer Rechenschaltung zur Berechnung der Temperatur und des Differenzdrucks zugeführt werden.

Ein Differenzdruckmeßgerät dieser Art ist aus der DE-PS 35 04 329 bekannt. Der Einkammer-Differenzdrucksensor besteht aus einem zylindrischen Grundkörper, an dessen beiden Stirnseiten je eine Membran unter Bildung eines Hohlraums angebracht ist. Die Meßkondensatoren sind durch Schichtelektroden gebildet, die auf den einander zugewandten Flächen des Grundkörpers und der Membranen angebracht sind. Die beiden Hohlräume sind durch einen im Grundkörper gebildeten Kanal miteinander verbunden, und das ganze Volumen der auf diese Weise gebildeten gemeinsamen Kammer ist mit einer inkompressiblen Flüssigkeit gefüllt. Wenn die auf die beiden Membranen einwirkenden Drücke verschieden groß sind, werden die beiden Membranen infolge der Kopplung durch die Flüssigkeit in der gleichen Richtung ausgelenkt, so daß sich die eine Membran dem Grundkörper nähert und die andere Membran vom Grundkörper entfernt. Dadurch ändern sich die Kapazitäten der Meßkondensatoren in Abhängigkeit vom Differenzdruck gegensinnig, wobei der Differenzdruck näherungsweise der Differenz der reziproken Kapazitätswerte proportional ist. Wenn sich dagegen das Volumen der Flüssigkeit infolge einer Temperaturänderung ändert, werden die beiden Membranen in entgegengesetzten Richtungen ausgelenkt, so daß sie sich gleichzeitig dem Grundkörper nähern oder vom Grundkörper entfernen. Demzufolge ändern sich die Kapazitäten der Meßkondensatoren in der Abhängigkeit von der Temperatur gleichsinnig, wobei die Temperatur näherungsweise der Summe der reziproken Kapazitätswerte proportional ist. Die Rechenschaltung berechnet die Temperatur aus der Summe der reziproken Kapazitätswerte und verwendet das Ergebnis zur Korrktur der Temperaturabhängigkeit des aus der Differenz der reziproken Kapazitätswerte berechneten Differenzdrucks.

Mit diesem bekannten Differenzdruckmeßgerät wird zwar ein von Temperaturschwankungen unabhängiges Meßergebnis des Differenzdrucks erhalten, doch können Störungen und andere Fehlerursachen, die zu einem falschen Meßergebnis führen, nicht erkannt werden. Ursachen für nicht erkennbare Meßfehler sind beispielsweise ein Flüssigkeitsverlust infolge von Undichtigkeit, Änderungen der Membraneigenschaften infolge von Beschädigung oder Abnutzung usw.

Aufgabe der Erfindung ist die Schaffung eines Differenzdruckmeßgeräts der eingangs angegebenen Art, bei welchem Störungen und andere Fehlerursachen, die zu einem falschen Meßergebnis führen, durch eine Selbstüberwachung mit großer Sicherheit erkannt und angezeigt werden.

Zur Lösung dieser Aufgabe enthält das Differenzdruckmeßgerät nach der Erfindung eine Temperaturmeßeinrichtung zur unmittelbaren Messung der Temperatur des Einkammer-Differenzdrucksensors und eine Vergleichseinrichtung, die die aus den Kapazitäten der Meßkondensatoren berechnete Temperatur mit der gemessenen Temperatur vergleicht und ein das Bestehen eines Fehlers anzeigendes Signal abgibt, wenn die Abweichung zwischen den verglichenen Temperaturen einen vorbestimmten Grenzwert überschreitet.

Bei dem Differenzdruckmeßgerät nach der Erfindung ergibt jede Störung und Fehlerursache, die zu einer falschen Kapazitätsmessung führt, auch eine Abweichung der aus den Kapazitätswerten berechneten Temperatur von der unmittelbar gemessenen Temperatur. Somit wird das Vorliegen eines Meßfehlers mit Sicherheit selbst dann erkannt und angezeigt, wenn die Werte des berechneten Differenzdrucks und der berechneten Temperatur durchaus noch plausibel sind. Natürlich werden auch Störungen, die zu einem vollständigen Ausfall der Messung führen, wie Kabelbrüche, Defekt einer Kapazitätsmeßschaltung oder dergleichen, sofort erkannt und angezeigt. Darüber hinaus wird auch die hinzugefügte Temperaturmeßeinrichtung auf richtiges Funktionieren überwacht, denn jede Störung der Temperaturmeßeinrichtung führt ebenfalls zu einer Abweichung der gemessenen Temperatur von der aus den Kapazitätswerten berechneten Temperatur. Es besteht also eine vollständige Selbstüberwachung des Differenzdruckmeßgeräts mit hoher Eigensicherheit.

Vorzugsweise weist die Temperaturmeßeinrichtung einen am Differenzdrucksensor angebrachten Temperatursensor und eine mit dem Temperatursensor verbundene Temperaturmeßschaltung auf.

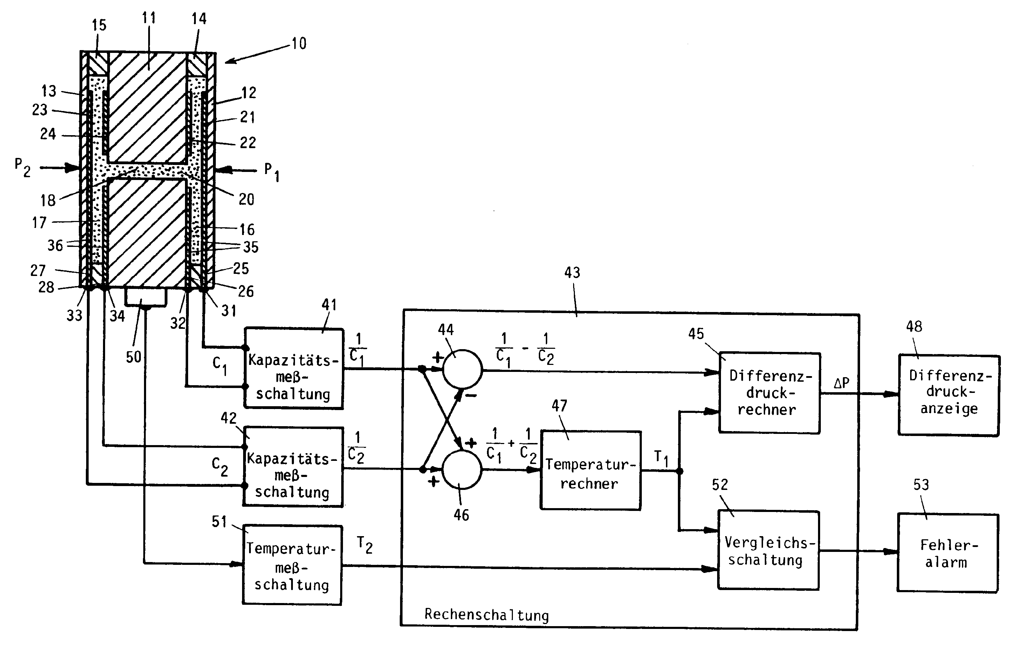

Weitere Merkmale und Vorteile der Erfindung ergeben sich aus der folgenden Beschreibung eines Ausführungsbeispiels, das schematisch in der einzigen Figur der Zeichnung dargestellt ist.

Das in der Zeichnung dargestellte Differenzdruckmeßgerät besteht aus einem Einkammer-Differenzdrucksensor 10 und einer Auswerteschaltung. Der Einkammer-Differenzdrucksensor 10 hat einen zylindrischen Grundkörper 11, an dessen beiden Stirnseiten zwei elastische Membranen 12 und 13 unter Einfügung von um den Umfang verlaufenden Distanzringen 14 bzw. 15 druckdicht befestigt sind. Der Grundkörper 11 und die Membranen 12, 13 bestehen aus einem elektrisch isolierenden Material, vorzugsweise aus einer Metalloxidkeramik. Desgleichen bestehen die Distanzringe 14 und 15 vorzugsweise aus einem elektrisch isolierenden Material, das die druckdichte Verbindung zwischen dem Grundkörper 11 und den Membranen 12 und 13 bewirkt, beispielsweise aus Glasfritte. Durch die Distanzringe 14, 15 sind die Membranen 12, 13 im Abstand vom Grundkörper 11 gehalten, so daß zwischen jeder Membran 12, 13 und der ihr zugewandten Stirnfläche des Grundkörpers 11 ein flacher Hohlraum 16 bzw. 17 besteht. Die beiden Hohlräume 16 und 17 sind durch einen im Grundkörper 11 gebildeten axialen Kanal 18 miteinander verbunden, so daß sie eine gemeinsame Kammer bilden, die druckdicht nach außen abgeschlossen ist. Das gesamte Volumen der Kammer ist mit einer inkompressiblen, isolierenden Flüssigkeit 20 gefüllt, beispielsweise mit Silikonöl.

Die dem Grundkörper 11 zugewandte Innenseite der Membran 12 ist mit einer Schichtelektrode 21 belegt, die einer ringförmigen Schichtelektrode 22 auf der ihr zugewandten Stirnfläche des Grundkörpers 11 gegenüberliegt. Desgleichen ist die Innenseite der Membran 13 mit einer Schichtelektrode 23 belegt, die einer ringförmigen Schichtelektrode 24 auf der ihr zugewandten Stirnfläche des Grundkörpers 11 gegenüberliegt. Die Schichtelektroden 21, 22, 23, 24 sind durch Verbindungsleiter 25, 26, 27, 28 mit von außen zugänglichen Anschlußstellen 31, 32, 33, 34 verbunden. Bei dem dargestellten Beispiel sind die Verbindungsleiter 25 bis 28 Schichtleiterstreifen, die gemeinsam mit den zugehörigen Schichtelektroden 21 bis 24 aufgebracht sind und zwischen den Distanzringen 14, 15 und dem Grundkörper 11 bzw. den Membranen 12, 13 zum Außenumfang verlaufen. Beispielsweise können die Schichtelektroden 21 bis 24 gemeinsam mit den Schichtleiterstreifen 25 bis 28 in Dickschichttechnik aufgebracht sein.

Die Schichtelektrode 21 bildet mit der ihr gegenüberliegenden Schichtelektrode 22 einen ersten Meßkondenator 35 der Kapazität $C_1$, die zwischen den Anschlußstellen 31 und 32 meßbar ist, und die Schichtelektrode 23 bildet mit der ihr gegenüberliegenden Schichtelektrode 24 einen zweiten Meßkondensator 36 der Kapazität $C_2$, die zwischen den Anschlußstellen 33 und 34 meßbar ist.

Der auf die Membran 12 einwirkende Druck ist mit $P_1$ und der auf die Membran 13 einwirkende Druck ist mit $P_2$ bezeichnet. Wenn die beiden Drücke $P_1$ und $P_2$ gleich groß sind, so daß der Differenzdruck

$$\Delta P = P_1 - P_2$$

Null ist, befindet sich der Differenzdrucksensor 10 in dem dargestellten Gleichgewichtszustand, bei welchem die Kapazitäten $C_1$ und $C_2$ der beiden Meßkondensatoren 35, 36 gleich groß sind, wenn ein völlig symmetrischer Aufbau ohne Fertigungstoleranzen vorausgesetzt wird. Infolge der inkompressiblen Flüssigkeit 20, die das ganze Volumen zwischen den beiden Membranen 12 und 13 ausfüllt, können nämlich die Membranen durch die darauf einwirkenden

Drücke $P_1$ und $P_2$ nicht ausgelenkt werden, wenn diese Drücke gleich groß sind. Wenn jedoch beispielsweise der Druck $P_1$ größer als der Druck $P_2$ wird, kann er die Membran 12 zum Grundkörper 11 hin auslenken, wobei ein Teil der inkompressiblen Flussigkeit 20 aus dem Hohlraum 16 durch den Kanal 18 in den Hohlraum 17 verdrängt wird, so daß die Membran 13 gegen den Druck $P_2$ vom Grundkörper 11 weg nach außen ausgelenkt wird. Infolge der Auslenkung der beiden Membranen 12 und 13 wird der Abstand zwischen den Schichtelektroden 21 und 22 kleiner und der Abstand zwischen den Schichtelektroden 23 und 24 größer. Dementsprechend wird die Kapazität $C_1$ größer und die Kapazität $C_2$ kleiner. Durch Messung der beiden Kapazitäten $C_1$ und $C_2$ läßt sich daher der Differenzdruck $\Delta P$ bestimmen. Wenn man Nichtlinearitäten und den Einfluß von Störgrößen vernachlässigt, ist der Differenzdruck $\Delta P$ näherungsweise der Differenz der reziproken Kapazitätswerte proportional:

$$\Delta P = k_p \cdot \left( \frac{1}{C_1} - \frac{1}{C_2} \right) \quad (1)$$

Eine wichtige Störgröße, die die Differenzdruckmessung beeinflußt, ist die Temperatur, denn die Kapazitäten $C_1$ und $C_2$ der beiden Meßkondensatoren sind außer vom Differenzdruck $\Delta P$ auch von der Temperatur abhängig. Bei einer Temperaturänderung ändert sich nämlich auch das Volumen der zwischen den beiden Membranen 12 und 13 eingeschlossenen Flüssigkeit 20. Wenn bei einer Temperaturzunahme das Volumen der Flüssigkeit 20 größer wird, werden die beiden Membranen 12 und 13 nach außen ausgelenkt, so daß die Abstände zwischen den Schichtelektroden 21 und 22 einerseits und zwischen den Schichtelektroden 23 und 24 andererseits gleichzeitig größer werden. Dementsprechend werden die Kapazitäten $C_1$ und $C_2$ gleichzeitig kleiner. Umgekehrt werden bei einer durch Temperaturabnahme bedingten Verkleinerung des Flüssigkeitsvolumens die Kapazitätswerte $C_1$ und $C_2$ gleichzeitig größer. Näherungsweise ist die Temperaturänderung der Summe der reziproken Kapazitätswerte proportional:

$$\Delta T = K_T \cdot \left( \frac{1}{C_1} + \frac{1}{C_2} \right) \quad (2)$$

Aufgrund dieser Tatsache ist es möglich, aus den gemessenen Kapazitäten $C_1$ und $C_2$ die Temperatur des Einkammer-Differenz drucksensors 10 zu bestimmen und zur Korrektur der Temperaturabhängigkeit des Differenzdrucks $\Delta P$ zu verwenden. Dies geschieht in der nachfolgend beschriebenen Auswerteschaltung des in der Zeichnung dargestellten Differendruckmeßgeräts.

Die Auswerteschaltung enthält eine erste Kapazitätsmeßschaltung 41, die zur Messung der Kapazität $C_1$ an die Anschlußstellen 31, 32 angeschlossen ist, und eine zweite Kapazitätsmeßschaltung 42, die zur Messung der Kapazität $C_2$ an die Anschluß-

stellen 33, 34 angeschlossen ist. Jede Kapazitätsmeßschaltung ist so ausgebildet, daß sie am Ausgang ein Meßsignal abgibt, das dem reziproken Wert der gemessenen Kapazität proportional ist. Somit gibt die Kapazitätsmeßschaltung 41 ein Meßsignal ab, das dem Wert $1/C_1$ proportional ist, und die Kapazitätsmeßschaltung 42 gibt ein Meßsignal ab, das dem Wert $1/C_2$ proportional ist.

Die von den beiden Kapazitätsmeßschaltungen 41 und 42 abgegebenen Meßsignale werden einer Rechenschaltung 43 zugeführt, die daraus den Differenzdruck $\Delta P$ berechnet. Zur Veranschaulichung ist in der Zeichnung angedeutet, daß die Rechenschaltung 43 eine Subtrahierschaltung 44 enthält, die die Meßsignale von den beiden Kapazitätsmeßschaltungen 41 und 42 empfängt und am Ausgang ein Signal abgibt, das der Differenz $1/C_1 - 1/C_2$ der reziproken Kapazitätswerte proportional ist. Dieses Signal wird einem Differenzdruckrechner 45 zugeführt.

Ferner ist angedeutet, daß die Rechenschaltung 43 eine Summierschaltung 46 enthält, die ebenfalls die Meßsignale von den beiden Kapazitätsmeßschaltungen 41 und 42 empfängt und am Ausgang ein Signal abgibt, das der Summe $1/C_1 + 1/C_2$ der reziproken Kapazitätswerte proportional ist. Dieses Signal wird einem Temperaturrechner 47 zugeführt, der daraus die Temperatur $T_1$ des Einkammer-Differenzdrucksensors 10 berechnet. Diese Temperatur $T_1$ wird ebenfalls dem Differenzdruckrechner 45 mitgeteilt, der sie bei der Berechnung des korrigierten Differenzdrucks $\Delta P$ berücksichtigt. Ferner berücksichtigt der Differenzdruckrechner 45 bei der Berechnung des Differenzdrucks $\Delta P$ konstante Korrekturfaktoren, die bei einer Eichung des Einkammer-Differenzdrucksensors 10 ermittelt und in der Rechenschaltung 43 gespeichert worden sind. Diese Korrekturfaktoren betreffen beispielsweise die Nullpunktverschiebung der Meßwerte aufgrund von Fertigungstoleranzen, die Empfindlichkeit des Einkammer-Differenzdrucksensors usw.

Der vom Differenzdruckmesser 45 berechnete Differenzdruck $\Delta P$ kann auf einer Differenzdruckanzeige 48 angezeigt werden.

Die Rechenschaltung 43 kann in beliebiger, an sich bekannter Weise ausgebildet sein, beispielsweise mit bekannten Analog- oder Digitalschaltungen. Vorzugsweise ist die Rechenschaltung durch einen geeignet programmierten Mikroprozessor gebildet. Falls die von den Kapazitätsmeßschaltungen 41 und 42 gelieferten Meßsignale nicht in einer Form vorliegen, die für die Verarbeitung durch einen Mikroprozessor unmittelbar geeignet ist, müssen natürlich die erforderlichen Analog-Digital-Wandler oder Schnittstellen eingefügt werden, wie dies dem Fachmann geläufig ist.

Der bisher beschriebene Teil des Differenzdruckmeßgeräts entspricht dem bekannten Stand der Technik. Von diesem Stand der Technik unterscheidet sich das dargestellte Differenzdruckmeßgerät durch die nachfolgend beschriebenen Maßnahmen.

Am Einkammer-Differenzdrucksensor 10 ist ein Temperatursensor 50 so angebracht, daß er im wesentlichen die gleiche Temperatur erfaßt, die auch vom Temperaturrechner 47 aus den Kapazitäten $C_1$ und $C_2$ der beiden Meßkondensatoren berechnet wird. In der Zeichnung ist angedeutet, daß der Temperatursensor 50 an der Umfangsfläche des zylindrischen Grundkörpers 11 angebracht ist. Der Temperatursensor 5 kann ein beliebiger, an sich bekannter Temperatursensor sein, beispielsweise ein temperaturabhängiger Widerstand des Typs PT 100.

Mit dem Temperatursensor 50 ist eine Temperaturmeßschaltung 51 verbunden, die am Ausgang ein Meßsignal abgibt, das der vom Temperatursensor 50 detektierten Temperatur $T_2$ entspricht. Dieses Ausgangssignal wird einer Vergleichsschaltung 52 zugeführt, die andererseits das Ausgangssignal des Temperaturrechners 47 empfängt, das die aus den Kapazitätswerten $C_1$ und $C_2$ berechnete Temperatur $T_1$ angibt. Die Vergleichsschaltung 52 vergleicht die berechnete Temperatur $T_1$ mit der gemessenen Temperatur $T_2$. Wenn zwischen diesen beiden Temperaturen eine Abweichung besteht, die einen vorbestimmten Grenzwert überschreitet, gibt die Vergleichsschaltung 52 ein Signal ab, das anzeigt, daß in dem Differenzdruckmeßgerät eine Fehlerursache besteht, die zu einem falschen Meßergebnis führt. Dieses Signal kann beispielsweise einen Fehleralarm 53 auslösen oder auf andere Weise verwendet werden, um das Vorliegen eines Fehlers anzuzeigen und/oder die Verwendung des berechneten Differenzdrucks zu verhindern.

Auf diese Weise können praktisch alle Bestandteile des Differenzdruckmeßgeräts auf einwandfreien Betrieb überwacht werden, denn jede Störung oder sonstige Fehlerursache, die zu einer falschen Kapazitätsmessung führt, äußert sich sofort in einer Abweichung zwischen der berechneten Temperatur $T_1$ und der gemessenen Temperatur $T_2$. Dies gilt insbesondere für die folgenden Fehlerquellen:

1. Ölverlust im Einkammer-Differenzdrucksensor 10;

2. Defekt einer Kapazitätsmeßschaltung 41, 42;

3. Kabelbruch;

4. Defekt des Temperatursensors 50 oder der Temperaturmeßschaltung 51.

**Patentansprüche**

1. Differenzdruckmeßgerät mit einem flüssigkeitsgefüllten Einkammer-Differenzdrucksensor (10), der zwei Meßkondensatoren (35,36) enthält, deren Kapazitäten sich mit einem zu erfassenden Differenzdruck gegensinnig und mit der Temperatur gleichsinnig ändern und von zugeordneten Kapazitätsmeßschaltungen (41,42) zu Meßsignalen umgeformt werden, die einer Rechenschaltung (43) zur Berechnung der Temperatur und des Differenzdrucks zugeführt werden, **gekennzeichnet durch** eine Temperaturmeßeinrichtung (50,51) zur unmittelbaren Messung der Temperatur des Einkammer-Differenzdrucksensors und durch eine Vergleichseinrichtung, die die aus den Kapazitäten der Meßkondensatoren berechnete Temperatur mit der gemessenen Temperatur vergleicht und ein das Bestehen eines Fehlers anzeigendes Signal abgibt, wenn die Abweichung zwischen den verglichenen Temperaturen einen vorbestimmten Grenzwert überschreitet.

2. Differenzdruckmeßgerät nach Anspruch 1, **dadurch gekennzeichnet**, daß die Temperaturmeßeinrichtung einen am Differenzdrucksensor (10) angebrachten Temperatursensor (50) und eine mit dem Temperatursensor verbundene Temperaturmeßschaltung (51) aufweist.

## Claims

1. Differential pressure measuring apparatus comprising a single chamber differential pressure sensor (10) filled with a fluid and having two measuring capacitors (35, 36) whose capacitances vary in opposite senses in response to the differential pressure to be measured and in the same sense in response to the temperature, said capacitances being transformed by means of associated capacitance measuring circuits (41, 42) into measurement signals which are supplied to a calculation circuit (43) for calculating the temperature and the differential pressure, characterized in that it further comprises a temperature measuring means (50, 51) for measuring directly the temperature of the single chamber differential pressure sensor and a comparison means for comparing the temperature calculated from the capacitances of the measuring capacitors and the measured temperature and for delivering a signal indicating the occurrence of a failure when the difference between the compared temperatures exceeds a predetermined threshold.

2. The differential pressure measuring apparatus of claim 1, characterized in that the temperature measuring means comprises a temperature sensor (50) mounted on the differential pressure sensor (10) and a temperature measuring circuit (51) connected to the temperature sensor.

## Revendications

1. Dispositif pour mesurer la pression différentielle équipé d'un capteur de pression différentielle (10) à chambre unique rempli de liquide et comportant deux condensateurs de mesure (35, 36) dont les capacités varient dans des sens opposés en fonction d'une pression différentielle à enregistrer et dans le même sens en fonction de la température et sont converties par des circuits de mesure de capacité (41, 42) associés en des signaux de mesure qui sont envoyés à un circuit de calcul (43) pour le calcul de la température et de la pression différentielle, caractérisé par un dispositif de mesure de température (50, 51) pour le calcul direct de la température du capteur de pression différentielle à chambre unique et par un dispositif comparatif qui compare la température calculée à partir des capacités des condensateurs de mesure avec la température mesurée et délivre un signal indiquant l'existence d'une erreur quand l'écart entre les températures comparées dépasse une valeur limite prédéterminée.

2. Dispositif pour mesurer la pression différentielle selon la revendication 1, caractérisé en ce que le dispositif de mesure de température comporte un capteur de température (50) fixé sur le capteur de mesure différentielle (10) et un circuit de mesure de température (51) relié au capteur de température.